# EUROPEAN PATENT SPECIFICATION

(11) **EP 2 179 947 B1**
(45) Date of publication and mention of the grant of the patent: **22.12.2010**
(21) Application number: 08425677.5
(22) Date of filing: 21.10.2008
(51) Int. Cl.: B65G 47/88, B65G 1/08

(54) **Device for drawing products from storing shelves**
Vorrichtung zum abladen von Artikeln auf Regalfächern eines Lagerregals
Dispositif de décharge pour articles sur étagère de stockage

(43) Date of publication of application: 28.04.2010
(73) Proprietor: Mec @ Mat s.r.l., 20049 Concorezzo (MI) (IT)
(72) Inventor: Sormani, Battista, 20052 Monza (IT)
(74) Representative: Arena, Giovanni

(56) References cited:
- WO-A-2007/039005
- US-A- 3 647 266

## Description

This invention refers to a device for the drawing of products from storing shelves.

### BACKGROUND OF THE INVENTION

There are known devices for the automatic drawing of products of a limited size and in box-like packages (for instance pharmaceutical products) from the storage shelves of the same.

One of these devices which corresponds to the preamble of claim 1 is for instance described in the document WO 2007/039005 A1 Said document describes a device for the storing and drawing of products from storage shelves, comprising a frame (2) carrying one or more tilted shelves (3) each of which carries a number of tilted channels (15) fitted at their lower extremity with a mechanical stop (8) capable of preventing a product approaching them from slipping out and falling, as well as fitted, at the same extremity, with at least one product ejecting device (9) equipped with a pneumatically actuated floating piston. Said floating piston-type product ejecting device is advantageous both due to its high reliability and consequent lack of any need for frequent maintenance operations as well as due to its ability of generating a reserve of energy in the device, based on a frame comprising tubular elements that are also useful as compressed air reservoirs. However, the presence of such ejecting devices has a considerable bearing on the system's overall cost.

### OBJECTS OF THE INVENTION

The purpose of this invention is to realize a device for the drawing of products from tilted shelves similar to those present in the mentioned device WO 2007/039 005 A1, but more favourable both in terms of lesser cost and increased reliability with respect to the ejection mechanisms used in said device.

### SUMMARY OF THE INVENTION

The invention provides a device for the drawing of products from tilted shelves fitted with dividing panels capable of forming, on each shelf, a row of tilted channels opening up on said lower rim of a mechanical stop capable of acting as a rest and restraint for the products present near the rim, so as to prevent it from slipping out of the shelf and falling. The device is characterized by the fact that each shelf holds a combination of:
- A channel running on the bottom of the shelf along its lower rim, destined to be partially covered by each of the products resting against said mechanical stop;
- A row of nozzles at the bottom of said channel, in such a number as to determine the presence of at least one nozzle in each of said channels;
- A conduit feeding compressed air to each of said nozzles at the command of a corresponding electrical valve, so as to form in each nozzle a jet of air directed toward the mouth of the channel covered by the product to be drawn, thus inducing the same product to overcome the mentioned mechanical stop and to cause its ejection and drawing.

### BRIEF DESCRIPTION OF THE DRAWINGS

The characteristics of the invention will turn out to be better evident from the following description regarding examples of embodiment of a non-limiting character and referring to the attached drawings, whose various figures offer the following simplified views:
Fig. 1: A prospective view of the storage shelf of the products, fitted with an ejecting device according to the invention;
Fig. 2: A prospective view of the ejecting device according to the invention, showing the row of nozzles present at the bottom of the channel 4 of Fig. 1;
Fig. 3: A sectional view of the section bar "p" of Fig. 1, offering a simplified view of the feeding system of each compressed air nozzle;
Figs. 4a. 4b: sectional views of the section bar with the overlying product to be drawn, suitable for explaining the reasons at the origin of the ejecting device's channel 4;
Figs. 5a, 5b: exploded prospective views of the two portions constituting an actuator 12 capable of being inserted into the channel 4 of Fig. 1;
Figs. 6a, 6b: sectional views of the portions of the Figs. 5a and 5b:
Figs. 7a.7b: sectional views of the assembled portions of the Figs. 5a and 5b, showing the actuator in its respective resting and working positions.
Fig.8a: a prospective view showing the section bar of Fig. 2 with an actuator inserted into the same;
Fig.8b: an increased sectional view of the section bar of Fig. 8a, passing through the actuator's center line.

### DESCRIPTION OF EMBODIMENT EXAMPLES OF THE INVENTION

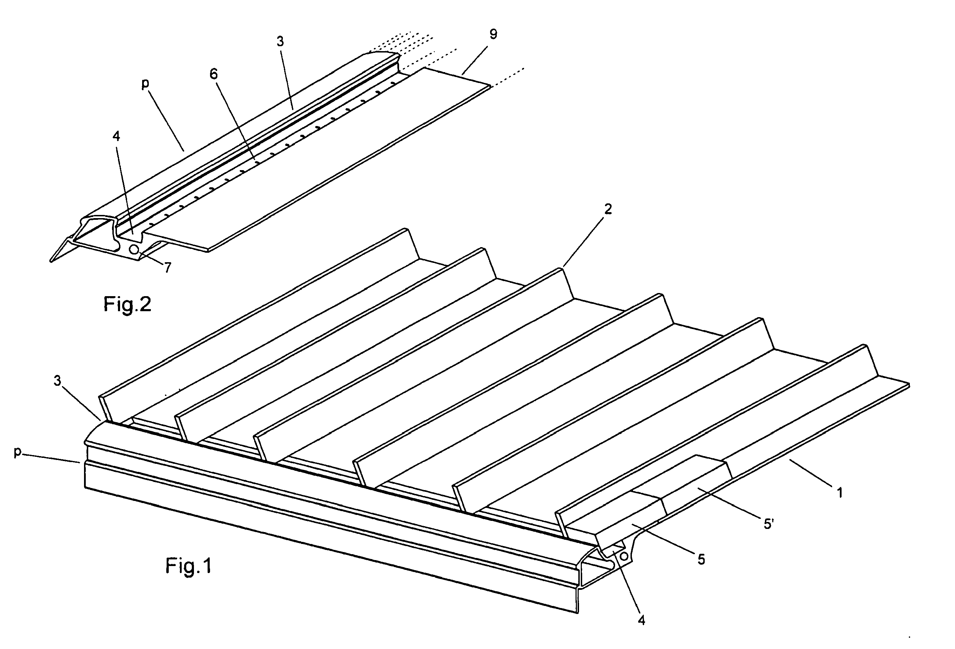

The embodiment example of a device for the drawing of products according to the invention in Figs. 1, 2 and 3 shows a tilted storage shelf 1 fitted with dividing panels 2 capable of forming, on the shelf, a row of tilted channels opening up to the shelfs lower rim and fitted on said lower rim with a mechanical stop 3 (essentially consisting of a stop projecting above the rim), capable of acting as a resting and stopping shoulder for the products near the rim (see Fig. 1). The products 5 and 5' are represented here for exemplifying purposes with a box-like packaging, where the product 5 rests on the stop 3, so as to prevent it from slipping out of the shelf and falling.

The device is characterized by the combined presence of:
- A channel running 4 in the bottom of the shelf, along its lower rim, destined to be partially covered by each of the products resting against the mentioned mechanical stop;
- A row of ejecting nozzles 6 at the bottom of the channel, in a number such as to determine the presence of at least one nozzle in each of the channels present on the shelf 1;
- A conduit 7 feeding compressed air to each of said nozzles at the command of a respective electrical valve 8, so as to cause each nozzle to direct jets of air toward the section of the channel mouth covered by the product to be drawn, and to provoke the product's overcoming of the mechanical stop 3, thus causing it to be ejected and drawn.

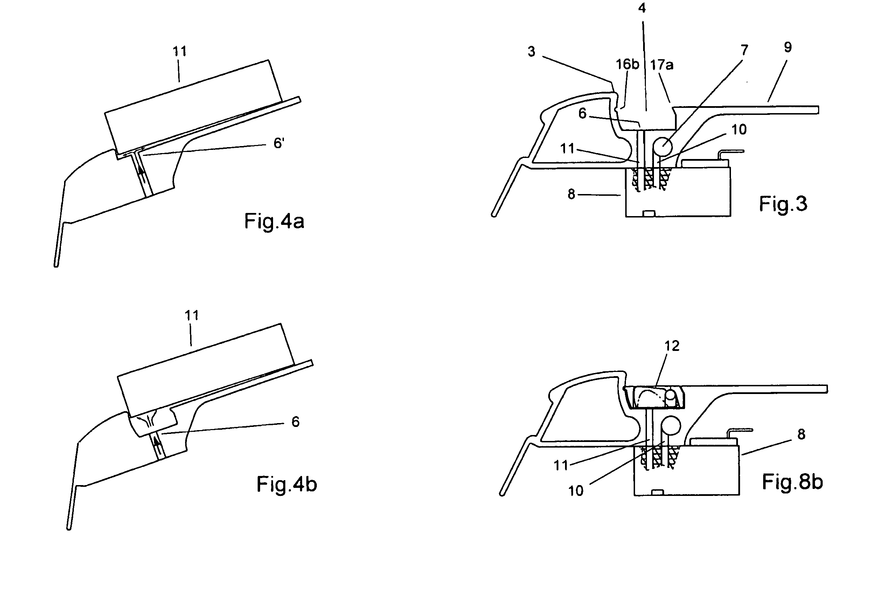

As shown in the drawings and in particular in the Figs. 2 and 3, the drawing device is conveniently implemented by a section bar (p) of a preferably metallic type, which forms:
- The lower rim of the storage shelf (part 9 of the Figs. 2 and 3);
- The channel running 4 along the rim;
- The compressed air feeding conduit 7, which consists of a continuous hole along the section bar above the channel;
- Pairs of holes (one pair for each nozzle 6) capable of taking air from the conduit 7 and introducing it into the respective injection nozzle, after passing through the respective electrical valve (see the holes 10 and 11 and the electrical valve 8 of Fig. 3).

The Figs. 4a and 4b offering a sectional view of section bars similar to that of Fig. 3 with an overlying product 11 to be drawn serve to explain the reasons for the presence of the channel 4 of the ejecting device.

Fig.4a in fact presumes a case wherein the air ejecting nozzles are not positioned at the bottom of a channel but are directly assigned to the surface of the products' resting plane (not part of the invention). The efficacy of the air jets exiting from the nozzle 6' would turn out to be influenced and substantially compromised by the so-called "Venturi-effect". According to this effect, the pressure of a fluid stream decreases with increasing speed. In the case under examination, the velocity of the air exiting from the nozzle 6' would, in passing the air gap between the bottom plane of the product 11 and the surface of the supporting shelf, undergo a considerable velocity increase, with a consequent considerable reduction of the air jet's ejecting force (in physics, this phenomenon also takes the name of "hydrodynamic paradox").

In the case of Fig. 4b, however, with the jet 6 resting on the bottom of a channel, the jet of air exiting from the nozzle is not subjected to any substantial increment of velocity when passing along the bottom surface of the product 11. This goes to the advantage of the air jet's ejecting efficiency.

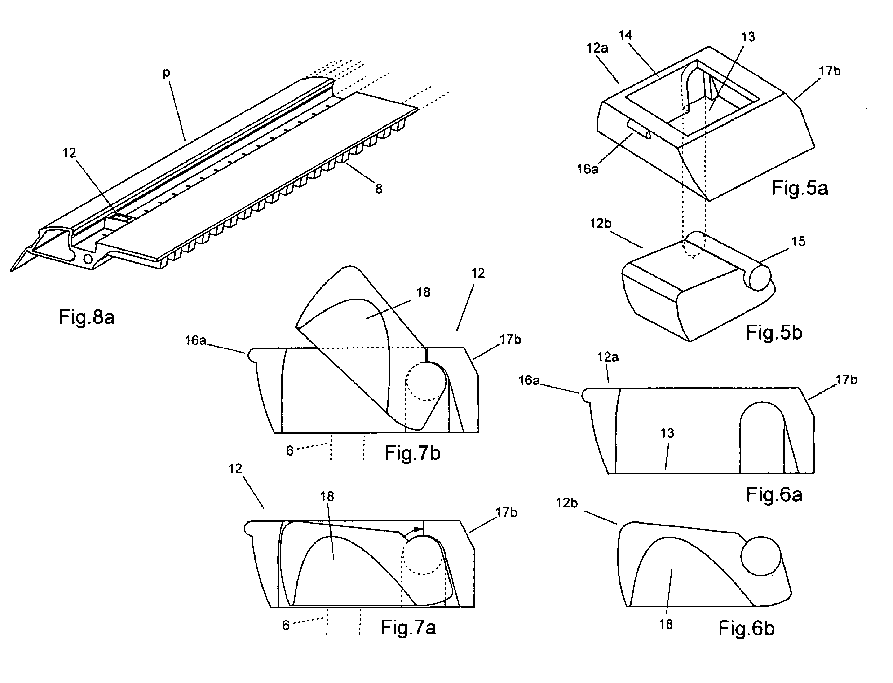

The Figs 5a, 5b, 6a, 6b, 7a, 7b, 8a, 8b are referring to an actuator 12 which is insertable above any nozzle of the channel 4, so as to boost the ejecting force of the air jets exiting the nozzle.

The products storable on the shelf 1 can, while having the same weight in the same channel, may be of a weight variable from channel to channel, and the previously described ejecting device is designed (in terms of nozzle diameter, flow and pressure of the exiting air jets, etc.) based on the maximum weight Pmax of any product to be ejected, so as to ensure a capacity of ejecting the great majority (for instance 95%) of the products storable on the shelf, while the residual amount (for instance 5%) concerning all the products of a weight above Pmax requires for ejection an accessory device, meaning the mentioned actuator, capable of increasing the ejecting efficiency of the air jets exiting from a nozzle.

The solution concept represented by the actuator takes into account the fact that when operating the ejection device previously described with reference to the Figs. 1 to 3, their air jets' ejecting capacity at each nozzle outlet is utilized only in part, as not all of the air emitted by a nozzle finds a way of exiting from the mouth of the channel occupied by the overlying product, because it can also flow out from the sides of the mouth flanking the part occupied by the product.

Under this assumption and as shown in the drawings, the actuator 12 is essentially constituted of a totally empty box-like body 12a, having an open bottom 13 and an upper opening 14 occupied by a lid 12b that presents one side 15 coupled through a hinge to a side of said upper opening 14. This keeps the lid closed in its resting position by gravity (see Fig. 7a), while in case of an air jet exiting from the nozzle 6 that the actuator is superimposed on, the air pressure inside the actuator causes the lid 12b to rotate to an opening position (see Fig. 7b) and to consequently eject the overlying product (not shown in the figures).

A preferred embodiment of the actuator provides, on one side of the box-like body 12a and of the channel 4, respectively, the presence of a rib or projection 16a (see in particular Fig. 5a) and a corresponding coupling surface (channel) 16b (see Fig. 3) as well as the presence of a rib or projection 17a (see Fig. 3) and a corresponding coupling surface 17b (see Figs 5a and 7a) on one side of the channel and the box-like body 12a, respectively, so as to allow the actuator 12, by manual pressure, to be snap-inserted and fastened into the channel (see Fig. 8b).

A further preferred form of embodiment of the actuator provides for the presence of a cavity 18 (see Figs. 6b, 7a, 7b) in the actuator's lid 12b, having a parabolic form and an opening capable of superimposing itself on the nozzle 6, on which the actuator is installed, whenever the lid 12b is in a resting position. This cavity serves both to nullify the Venturi effect as well as to maximize the pressure exerted on the lid by the air jets exiting from the nozzle.

The foregoing description highlights the advantages of the invention with respect to the known art, and in particular with respect to the ejecting devices described in the preceding document WO 2007/039005 A1.

The following advantages are in fact evident:
- The presence of ejecting actuators, and in particular of floating piston type actuators for each channel is eliminated;
- The drawing device has an extremely simple construction;
- There is a considerable reduction of the production costs (ab. 30%);
- There is a drastic reduction (ab. 80%) of the time needed for assembling each storage shelf;
- There is a substantial reduction of the thickness of each storage shelf, and a consequent increase of the system's storage capacity;
- There is a significant weight reduction of each shelf;
- The structure of the electrical valves 8 feeding the individual nozzles is simplified. These are no longer of a three-way type as in the case of piston-type ejectors, but only of a two-way type (inlet and outlet, thus eliminating the discharge outlet needed for operating the piston-type ejectors).

While the invention has been described with reference to only a few particular examples of embodiment, it is evident that numerous modifications, variations and substitutions of elements with others of a functionally equivalent type may be applied without thereby abandoning the scope of protection of the invention, as defined the following claims.

## Claims

1. Storage shelf equipped with dividing panels (2) capable of forming on the shelf a row of tilted channels opening up on the lower rim (9) of the shelf and fitted on said lower rim with a mechanical stop (3) capable of acting as a rest and restraint for the products lying next to the rim, so as to prevent them from slipping out of the shelf and falling, the shelf comprising a row of nozzles (6) and a conduit (7) feeding compressed air to each of these nozzles (6) at the command of a respective electrical valve (8), so as to generate in each nozzle (6) a jet of air directed toward the product to be drawn, and thus to cause the product to overcome the mentioned mechanical stop (3), leading to its ejection and drawing,
**characterized by** the fact that the shelf holds a channel (4) running on the bottom of the shelf, along its lower rim (9), whose mouth is destined to be partially covered by each of the products resting against said mechanical stop (3), wherein the row of nozzles (6) is on the bottom of said channel (4), and in such a number of nozzles as to establish the presence of at least one nozzle in each of said tilted channels.

2. Storage shelf according to claim 1, **characterized by** the presence of an actuator (12) destined to be superimposed to any of the mentioned nozzles (6) constituted of an internally empty box-like body (12a) having an open bottom (13) and an upper opening (14) occupied by a lid (12b) that presents one side coupled through a hinge to one side of said upper opening (14) so as to remain closed by gravity in its resting position during the absence of any jets of air from the nozzle, and to rotate into an opening position in case of a jet of air exiting from the nozzle (6) that the actuator (12) is superimposed on, thus causing the resulting ejection of the overlying product.

3. Storage shelf according to claim 2, **characterized by** the fact that said actuator (12) provides, on one first side of said box-like body (12a) and of said channel (4), respectively, the presence of a rib or projection (16a) and of a corresponding coupling surface (16b) as well as the presence of a rib or projection (17a) and of a corresponding coupling surface (17b) on a second side, opposite to the first, of said channel (4) and of the box-like body, respectively, so as to allow the actuator (12) to be snap inserted and fastened within the channel (4) by manual pressure.

4. Storage shelf according to claim 2, **characterized by** the fact that said actuator (12) provides for the presence of a cavity (18) in the actuator's lid (12b), having a cross section of a parabolic form and a mouth capable of superimposing itself on the nozzle (6) on which the actuator is installed, when the lid (12b) is in a resting position, for the purpose of maximizing the pressure exercised on the lid by the compressed air jets exiting the nozzle.

5. Storage shelf according to claim 1, **characterized by** the fact of being made of a section bar (p) that forms:
- The lower rim (9) of the storage shelf;
- The channel running (4) along said rim;
- The row of nozzles (6) present on the bottom of the channel (4);
- The compressed air feeding conduit (7), which consists of a continuous hole along the section bar below the channel;
- Pairs of holes (10, 11) with one pair for each nozzle (6), capable of drawing compressed air from the mentioned feeding conduit (7) and to introduce it into the respective ejecting nozzle, after passing through the respective electrical valve (8).

## Patentansprüche

1. Lagerregal, das mit Unterteilungsplatten (2), welche imstande sind, auf dem Regal eine Reihe geneigter Kanäle auszubilden, die sich am unteren Rand (9) des Regals öffnen, ausgestattet ist und an dem unteren Rand mit einem mechanischen Anschlag (3) versehen ist, welcher imstande ist, als Stütze und Rückhalt für die Produkte zu wirken, die neben dem Rand liegen, um zu verhindern, dass sie aus dem Regal gleiten und fallen, das Regal umfassend eine Reihe von Düsen (6) und eine Leitung (7), die jeder dieser Düsen (6) auf Steuerung eines jeweiligen Elektroventils (8) hin Druckluft zuführt, um in jeder Düse (6) einen Luftstrahl zu erzeugen, der zu dem Produkt, das gezogen werden soll, hin gerichtet ist, und damit zu bewirken, dass das Produkt den genannten mechanischen Anschlag (3) überwindet, was zu seinem Ausstoßen und Ziehen führt, **dadurch gekennzeichnet, dass** das Regal einen Kanal (4) hält, der auf dem Boden des Regals seinen unteren Rand (9) entlang verläuft, dessen Mündung dazu bestimmt ist, teilweise von jedem der Produkte abgedeckt zu sein, die an dem mechanischen Anschlag (3) ruhen, wobei sich die Reihe von Düsen (6) auf dem Boden des Kanals (4) befindet und eine derartige Anzahl von Düsen aufweist, dass das Vorhandensein von zumindest einer Düse in jedem der geneigten Kanäle hergestellt ist.

2. Lagerregal nach Anspruch 1, **gekennzeichnet durch** das Vorhandensein einer Betätigungsvorrichtung (12), die dazu bestimmt ist, jegliche der genannten Düsen (6) zu überlagern, und aus einem innen leeren, schachtelartigen Körper (12a) mit einem offenen Boden (13) und einer oberen Öffnung (14) gebildet ist, die von einem Deckel (12b) besetzt ist, der eine Seite über ein Gelenk an eine Seite der oberen Öffnung (14) gekuppelt aufweist, um während der Abwesenheit jeglicher Luftstrahle von der Düse **durch** Schwerkraft in seiner Ruheposition zu verbleiben und im Falle eines Luftstrahls, der aus der Düse (6) austritt, über der die Betätigungsvorrichtung (12) gelagert ist, in eine Öffnungsposition zu drehen, wodurch das Ausstoßen des darüber lagernden Produkts erfolgt.

3. Lagerregal nach Anspruch 2, **dadurch gekennzeichnet, dass** die Betätigungsvorrichtung (12) auf einer ersten Seite des schachtelartigen Körpers (12a) bzw. des Kanals (4) das Vorhandensein einer Rippe oder eines Vorsprungs (16a) und einer entsprechenden Kupplungsfläche (16b) sowie das Vorhandensein einer Rippe oder eines Vorsprungs (17a) und einer entsprechenden Kupplungsfläche (17b) auf einer zweiten, der ersten gegenüberliegenden Seite des Kanals (4) bzw. des schachtelartigen Körpers vorsieht, um zu ermöglichen, dass die Betätigungsvorrichtung durch manuellen Druck in den Kanal (4) einschnappt und darin befestigt ist.

4. Lagerregal nach Anspruch 2, **dadurch gekennzeichnet, dass** die Betätigungsvorrichtung (12) das Vorhandensein eines Hohlraums (18) in dem Deckel (12b) der Betätigungsvorrichtung mit einem parabolischen Querschnitt und einer Mündung vorsieht, die imstande ist, die Düse (6) zu überlagern, auf der die Betätigungsvorrichtung eingerichtet ist, wenn sich der Deckel (12b) in der Ruheposition befindet, um den Druck, der durch die Druckluftstrahle, die aus der Düse austreten, ausgeübt ist, zu maximieren.

5. Lagerregal nach Anspruch 1, **dadurch gekennzeichnet, dass** es aus einem Profilstahl (p) hergestellt ist, der Folgendes ausbildet:
- den unteren Rand (9) des Lagerregals;
- den Kanal (4), der den Rand entlang verläuft;
- die Reihe von Düsen (6), die auf dem Boden des Kanals (4) vorhanden sind;
- die Druckluftzufuhrleitung (7), die aus einem fortlaufenden Loch entlang des Profilstahls unter dem Kanal besteht;
- Paare von Löchern (10, 11) mit einem Paar für jede Düse (6), die imstande sind, Druckluft aus der genannten Zufuhrleitung (7) abzuziehen und sie nach dem Durchlaufen des jeweiligen Elektroventils (8) in die jeweilige Ausstoßdüse einzuführen.

## Revendications

1. Étagère de stockage équipée de panneaux de séparation (2) aptes à former sur l'étagère une rangée de canaux inclinés s'ouvrant sur le rebord inférieur (9) de l'étagère, cette dernière comportant, sur ledit rebord inférieur, une butée mécanique (3) apte à agir en tant que moyen de repos et de rétention pour les produits se trouvant à côté du rebord, afin de les empêcher de s'échapper de l'étagère et de tomber, l'étagère comportant une rangée de buses (6) et un conduit (7) fournissant de l'air comprimé à chacune de ces buses (6) selon la commande opérée par une valve électrique respective (8), de manière à produire dans chaque buse (6) un jet d'air orienté vers le produit devant être extrait, et, de ce fait, amener le produit à surmonter la butée mécanique (3) mentionnée, provoquant son éjection et son extraction,
**caractérisé par le fait que** l'étagère comprend un canal (4) s'étendant sur la partie inférieure de l'étagère, le long de son rebord inférieur (9), dont l'embouchure est destinée à être partiellement recouverte par chacun des produits reposant contre ladite butée mécanique (3), la rangée des buses (6) étant située sur le fond dudit canal (4), et comprenant un nombre de buses tel qu'au moins une buse soit présente dans chacun desdits canaux inclinés.

2. Étagère de stockage selon la revendication 1, **caractérisée par** la présence d'un système d'actionnement (12) destiné à être placé au dessus de l'une quelconque des buses (6) mentionnées, constitué d'un corps (12a) sous forme de boîte, vide intérieurement, ayant un fond ouvert (13) et une ouverture supérieure (14) occupée par un couvercle (12b) qui présente un côté couplé par une charnière à un côté de ladite ouverture supérieure (14) afin de rester fermé par gravité dans sa position de repos pendant l'absence de tout jet d'air provenant de la buse, et de tourner dans une position d'ouverture en cas de jet d'air sortant de la buse (6) au dessus de laquelle le système d'actionnement (12) est placé, provoquant de ce fait l'éjection du produit placé au dessus.

3. Étagère de stockage selon la revendication 2, **caractérisée par le fait que** ledit système d'actionnement (12) comprend, sur un premier côté dudit corps (12a) sous forme de boîte et dudit canal (4), respectivement une nervure ou une saillie (16a) et une surface correspondante d'accouplement (16b), et, sur un second coté dudit canal (4) et du corps sous forme de boîte, opposé audit premier côté, respectivement une nervure ou une saillie (17a) et une surface correspondante d'accouplement (17b), afin de permettre au système d'actionnement (12) d'être inséré et retenu par encliquetage dans le canal (4), par pression manuelle.

4. Étagère de stockage selon la revendication 2, **caractérisée par le fait que** ledit système d'actionnement (12) inclut la présence d'une cavité (18) dans le couvercle (12b) du système d'actionnement, ayant une section transversale sous la forme d'une parabole et une embouchure apte à se placer elle-même au dessus de la buse (6) au dessus de laquelle le système d'actionnement est installé, lorsque le couvercle (12b) est en position de repos, afin de maximiser la pression exercée sur le couvercle par les jets d'air comprimé sortant de la buse.

5. Étagère de stockage selon la revendication 1, **caractérisée par** le fait d'être fabriquée à partir d'une barre de section (p) qui forme :
- Le rebord inférieur (9) de l'étagère de stockage ;
- Le canal (4) s'étendant le long dudit rebord ;
- La rangée des buses (6) présente sur le fond du canal (4) ;
- Le conduit (7) d'alimentation en air comprimé, qui consiste en un trou continu le long de la barre de section au-dessous du canal ;
- Des paires de trous (10, 11) avec une paire pour chaque buse (6), aptes à recevoir de l'air comprimé depuis le conduit d'alimentation (7) mentionné et de l'introduire dans la buse d'éjection respective, après passage par la valve électrique (8) respective.
